# EUROPÄISCHE PATENTSCHRIFT

(11) **EP 3 592 805 B1**
(45) Veröffentlichungstag und Bekanntmachung des Hinweises auf die Patenterteilung: **21.06.2023**
(21) Anmeldenummer: 18708666.5
(22) Anmeldetag: 01.03.2018
(51) Int. Cl.: C08J 9/00, C08J 9/28, C08L 29/04, A47L 13/16

(54) **REINIGUNGSARTIKEL**
CLEANING ARTICLE
ARTICLE DE NETTOYAGE

(30) Priorität: 08.03.2017 DE 102017002129
(43) Veröffentlichungstag der Anmeldung: 15.01.2020
(73) Patentinhaber: Carl Freudenberg KG, 69469 Weinheim (DE)
(72) Erfinder: BEDUE, Olivier, 69469 Weinheim (DE); HAUSDORF, Jörg, 64668 Rimbach (DE); VROOM, Gerrius, 6932 HJ Westervoort (NL); WEIS, Norbert, 69469 Weinheim (DE); RIEGER, Christoph, 69198 Schriesheim (DE)
(86) Internationale Anmeldenummer: PCT/EP2018/055099
(87) Internationale Veröffentlichungsnummer: WO 2018/162328

(56) Entgegenhaltungen:
- WO-A1-2014/191071

## Beschreibung

Die Erfindung betrifft einen Reinigungsartikel, insbesondere ein Schwammtuch, umfassend einen Polvinylformal-Schaum.

Im Haushalt und in der professionellen Reinigung sind verschiedene Arten von Reinigungsartikeln bekannt, die für die Reinigung des Fußbodens oder anderer Flächen dienen. Die Reinigungsartikel können einen einfachen Aufbau haben, indem sie beispielsweise aus einem einschichtigen Grundkörper gebildet sind. Wichtig für den Reinigungsartikel ist, dass es den Schmutz von der zu reinigenden Fläche gut aufnimmt und beim Auswringvorgang möglichst vollständig wieder abgibt. Zudem ist die Wasseraufnahme und -abgabe des Reinigungsartikels wichtig. Wasser wird einerseits zum Anlösen von anhaftendem Schmutz benötigt, andererseits werden damit der angelöste Schmutz, bzw. lose Schmutzpartikel wie Staub etc. gebunden und mit dem Reinigungsartikel von der zu reinigenden Oberfläche entfernt. Des Weiteren sind die Gleiteigenschaften des Reinigungsartikels für den Benutzer wichtig. Hier hat sich gezeigt, dass beim Reinigen großer Flächen (z.B. Fenster, Schultafeln, großer Tische, Wände, Autokarosserien) der Reinigungsartikel eher leicht gleiten sollte, um eine gute Ergonomie und einen geringen Kraftaufwand beim Wischen zu erzielen. Bei kleineren oder stärker verschmutzen Flächen hingegen bevorzugen Benutzer oft Reinigungsartikel mit einer höheren Friktion, damit anhaftender Schmutz besser entfernt werden kann, bzw. der Reinigungsvorgang auch haptisch erfassbar ist.

Hervorragende Reinigungsleistungen zeigen beispielsweise Schwämme aus Polyurethan- (PU-) oder Viskose. Es ist ferner bekannt, textile Trägermaterialien mit einer Beschichtung, bzw. Imprägnierung aus den vorgenannten Materialien zu versehen. So können textile Materialien beispielsweise mit einer Polyurethan- (PU-) Beschichtung, bzw. Imprägnierung versehen werden. Die Auftragung der PU-Beschichtungs-, bzw. Imprägnierungsmasse erfolgt dabei nach gängiger Praxis derart, dass das Substrat in eine Lösung aus PU und Dimethylformamid (DMF) eingetaucht wird. Alternativ kann das PU auch als Schaum ausgebildet werden. Unter einem Schaum wird erfindungsgemäß ein offen- und/oder geschlossenporiges Material verstanden. Nachteilig an PU ist jedoch, dass seine Wasserabsorptionsfähigkeit vergleichsweise gering ist.

Ebenfalls hervorragende Reinigungsleistungen und insbesondere eine hervorragende Wasserabsorptionsfähigkeit zeigen Polyvinylformal (PVF)-Schaum enthaltende Materialien. PVF-Schäume sind poröse Materialien, deren Porosität in weiten Bereichen eingestellt werden kann. Um die Porosität einzustellen, können bei der Herstellung Schaumbildner eingesetzt werden. Hierbei werden in der Regel makroporöse Schaumstrukturen erzeugt. Auf Verwendung der Schaumbildner kann jedoch auch verzichtet werden, wodurch in der Regel ein mikroporöser Schaum entsteht.

Bereits seit mehr als 50 Jahren ist bekannt, dass aus Polyvinylalkohol (PVA) und Polyvinylacetat (PVAc) feste Schäume herstellbar sind (Wilson CL (1952): "Method of making expanded polyvinyl alcohol-formaldehyde reaction product and product resulting therefrom" (US 2,609,347 A). PVA- und/oder PVA/PVAc-Lösungen in Wasser können durch Schäumen, Mischen mit Porenbildungsmitteln und Additiven, Formen, Imprägnieren eines Textils oder eines Vliessubstrats verarbeitet werden. Der Schaum kann dann durch Eintauchen in eine Salzlösung koaguliert bzw. vernetzt und/oder in saurem Medium mit Formaldehyd als Vernetzer oder anderen Acetalisierungsreaktanden vernetzt werden (Nishimura H, Sato SM, Sato S (1972), "Method of producing polyvinyl acetal porous articles and the shaped porous articles made therefrom" (US-Patent Nr. 3663470). Die resultierenden Schäume bzw. Materialien haben eine gute chemische Stabilität und gute Wasserabsorption. Sie finden verschiedene Anwendungen in der Kosmetik (Pads), der industriellen Reinigung (Rollen) und für verschiedene andere Reinigungszwecke (Verbraucher/professionelle Reinigung; Besen, Schwämme, Tücher).

PVF-Schäume können als solche, d.h. ohne Trägermaterial, als Reinigungsartikel eingesetzt werden (Schwämme). Ebenfalls bekannt ist es, die PVF-Schäume auf Trägermaterialien auszubilden. Besonders geeignete Trägermaterialien sind dabei textile Flächengebilde auf Basis von PVA. Hierbei kann nämlich eine gute Haftung zwischen den Fasern und dem Beschichtungs-/Imprägnierungs-Material erzielt werden, da aufgrund der gleichartigen Materialien eine dauerhafte und waschstabile chemisch-physikalische Oberflächenverbindung zwischen Träger- und Beschichtungsmaterial erhalten werden kann.

Nachteilig an PVF-Schäumen ist, dass sie aufgrund einer großen Anzahl an Hydroxylgruppen in ihrer Struktur (was zu einer Vielzahl an Wasserstoffbrücken führt) im trockenen Zustand sehr hart und schwierig zu benetzen sind. Aus diesem Grund werden PVF-Schaum enthaltende Produkte für Verbraucher in der Regel im nassen Zustand verkauft. Hierzu werden die Produkte mit Wasser und/oder mit einem anderen üblichen Weichmachern (z.B. Glycerin, hygroskopischen Salzen, wie NaCl, MgCl2, Glykolderivaten, Zuckerlösungen) versetzt und in diesem Zustand verpackt, um zumindest in der Verpackung ihre Weichheit zu erhalten. Unter üblichen Weichmachern werden dabei Verbindungen verstanden, die verglichen zu Polymeren ein vergleichsweise niedriges Molekulargewicht, von beispielsweise weniger als 300 g/mol, oder von weniger als 250 g/mol, oder von weniger als 200 g/mol, beispielsweise von 10 g/mol bis 300 g/mol oder von 10 g/mol bis 250 g/mol oder von 10 g/mol bis 200 g/mol haben. Übliche Weichmacher sind ferner in der Regel bei Standardbedingungen wasserlöslich und/oder wassermischbar.

Die Plastifizierung von PVF-Schaum ist beispielsweise in folgenden Literaturstellen beschrieben:
- Properties of Poly(vinyl alcohol) Plasticized by Glycerin : (JOURNAL OF FOREST PRODUCTS & INDUSTRIES, 2014, 3(3), 151-153 ISSN:2325-4513(PRINT) ISSN 2325 - 453X (ONLINE)
- Plasticized polyvinyl alcohol composition (US 2948697 A)
- Studies on properties of pva film plasticized with mixture of urea/ethanolamine (Acta Polymerica Sinica 2010, 1 Issue (9): 1143-1147 DOI: 10.3724/SP.J.1105.2010.09460)
- Plasticized sponge material and method of making same (US 2664367 A).

Nachteilig an den üblicherweise verwendeten Weichmachern ist, dass diese aufgrund ihrer Wasserlöslichkeit/Wassermischbarkeit nicht dauerhaft im Material eingebunden sind, so dass der Reinigungsartikel, wenn er einmal gewaschen bzw. ausgespült und getrocknet wurde, keine Weichmacher mehr aufweist und deshalb wieder hart, steif und schwer zu befeuchten wird. Darüber hinaus wird er unansehnlich verformt und unangenehm im Griff.

Aus der WO2014/191071 (A1) ist ein Reinigungstuch bekannt, umfassend ein textiles Trägermaterial, welches zumindest teilweise mit einem PVF-Mikroschaum versehen ist. Das Trägermaterial kann Cellulosefasern in Form von Viskosefasern umfassen.

Die der Erfindung zu Grunde liegende Aufgabe besteht darin, einen Reinigungsartikel bereitzustellen, der die vorgenannten Nachteile zumindest teilweise ausräumt und der insbesondere gute Reinigungseigenschaften mit einer hohen Weichheit, Formstabilität und einem angenehmen Griff auch nach dem Waschen bzw. Ausspülen insbesondere in trockenem und selbstredend auch feuchten bzw. nassen Zustand dauerhaft kombiniert.

Diese Aufgabe wird gelöst durch einen Reinigungsartikel, umfassend einen PVF-Schaum, wobei der PVF-Schaum Cellulosefasern aufweist und wobei der Reinigungsartikel ein textiles Trägermaterial als Grundkörper aufweist, wobei das Trägermaterial mit dem Cellulosefasern aufweisenden PVF-Schaum beschichtet und/oder imprägniert ist.

Erfindungsgemäß wurde überraschend gefunden, dass es die Verwendung eines PVF-Schaums, der Cellulosefasern aufweist, ermöglicht einen Reinigungsartikel bereitzustellen, der nicht mit den üblicherweise verwendeten Weichmachern versehen werden muss und dennoch weich, formstabil und angenehm im Griff ist. Darüber hinaus können diese vorteilhaften Eigenschaften über einen längeren Zeitraum und insbesondere auch nach Öffnen der Verpackung erhalten werden. In einer bevorzugten Ausführungsform der Erfindung weist der Reinigungsartikel einen Anteil an üblichen Weichmachern, insbesondere an Verbindungen mit einem Molekulargewicht von weniger als 300 g/mol, oder von weniger als 250 g/mol, oder von weniger als 200 g/mol, beispielsweise von 10 g/mol bis 300 g/mol oder von 10 g/mol bis 250 g/mol oder von 10 g/mol bis 200 g/mol, beispielsweise an Wasser und/oder Glycerin, von weniger als 20 Gew.-%, vorzugsweise weniger als 15 Gew.-%, noch bevorzugter weniger als 10 Gew.-%, insbesondere weniger als 5 Gew.-%, jeweils bezogen auf das Gesamtgewicht des Reinigungsartikels auf. Ebenfalls bevorzugt weist der Reinigungsartikel einen Anteil an hygroskopischen Salzen, wie insbesondere NaCl, MgCl2, an Glykolderivaten und/oder Zuckerlösungen von weniger als 40 Gew.-%, vorzugsweise weniger als 30 Gew.-%, noch bevorzugter weniger als 20 Gew.-%, inbesondere weniger als 10 Gew.-%, jeweils bezogen auf das Gesamtgewicht des Reinigungsartikels auf.

Ohne sich erfindungsgemäß auf einen Mechanismus festzulegen, wird vermutet, dass die Cellulosefasern sich bei der Herstellung des Polvinylformal-Schaums gut in den PVA- und/oder PVA/PVAc-Lösungen verteilen können. Beim anschließenden Vernetzungsschritt, in dem der PVF-Schaum gebildet wird, können die Cellulosefasern dann gemeinsam mit den PVA- und/oder PVA/PVAc-Molekülen fixiert und gleichmäßig in die PVF-Matrix eingebunden werden. Dies führt zur Ausbildung von "Störzonen" in der Matrix, was zu einer Lockerung der vernetzten Matrixstruktur und damit einhergehend zu einer erhöhten Flexibilität und Weichheit des Reinigungsartikels auch im trockenen Zustand führt.

Aus diesem Grund liegen die Cellulosefasern vorteilhafterweise im PVF-Schaum verteilt, insbesondere homogen verteilt, vor.

Ferner kombiniert der Reinigungsartikel auch gute Reinigungseigenschaften mit guten Wasseraufnahme- und Gleiteigenschaften und weist dabei eine gute Waschstabilität auf.

Unter Cellulosefasern werden erfindungsgemäß natürliche Cellulose aufweisende pflanzliche Fasern (Holz-, Baumwoll-, Flachs-, Kenaf-, Hanf-, u. a.) sowie Chemiefasern, die aus regenerierter (Viskose, Lyocell, u. a.) oder veresterter Cellulose hergestellt werden können, verstanden.

In einer weiteren bevorzugten Ausführungsform der Erfindung weisen die Cellulosefasern, welche vorzugsweise Cellulosestapelfasern sind, eine mittlere Faserlänge von 5 µm bis 10 mm, vorzugsweise von 5 µm bis 5 mm, noch bevorzugter von 5 µm bis 1 mm und insbesondere von 5 µm bis 0,1 mm auf. Es wurde gefunden, dass die Ausbildung der Störstellen bei diesen Faserlängen besonders ausgeprägt ist.

Der Durchmesser der Cellulosestapelfasern ist vorzugsweise 1 bis 50 µm, noch bevorzugter 5 bis 30 µm und insbesondere 10 bis 25 µm.

In einer weiteren bevorzugten Ausführungsform der Erfindung beträgt der Anteil der Cellulosefasern von 1 bis 60 Gew.%, noch bevorzugter 5 bis 50 Gew.% und insbesondere 10 bis 40 Gew.% bezogen auf das Gesamtgewicht des PVF-Schaums.

Der PVF-Schaum weist vorteilhafter Weise eine mittlere Porengröße von 1 µm bis 5 mm, vorzugsweise von 1 µm bis 1 mm, noch bevorzugter von 1 µm bis 100 µm. Hieran ist vorteilhaft, dass mit diesen Porengröße sehr gute Absorptionsfähigkeiten erzielt werden können. Darüber hinaus weist der Reinigungsartikel bei diesen Porengrößen auch ein besonders attraktives Erscheinungsbild auf.

Erfindungsgemäß weist der Reinigungsartikel ein Trägermaterial auf, wobei als Trägermaterial ein textiles Trägermaterial, insbesondere ein Vliesstoff, Gewebe, Gewirke, Gestricke eingesetzt wird.

Mithin weist der Reinigungsartikel erfindungsgemäß ein textiles Trägermaterial als Grundkörper auf, das mit einem Cellulosefasern aufweisenden PVF-Schaum beschichtet und/oder imprägniert ist. Ein derartiger Reinigungsartikel wird erfindungsgemäß als Schwammtuch bezeichnet. Vorteilhaft an dieser Ausgestaltung ist, dass durch geeignete Auswahl des Trägermaterials die Eigenschaften und Herstellungskosten des Reinigungsartikels gezielt eingestellt werden können.

Das Flächengewicht des erfindungsgemäßen Reinigungsartikels kann in Abhängigkeit von den erwünschten Eigenschaften variieren. Gute Ergebnisse werden in der Regel mit Flächengewichten, im trockenen Zustand, im Bereich von 90 g/m2 bis 350 g/m2 erzielt, noch bevorzugter von 100 bis 300 g/m2, insbesondere von 200 bis 300 g/m2.

Die Dicke des erfindungsgemäßen Reinigungsartikels kann ebenfalls variieren; in der Regel werden mit Dicken im Bereich von 0,1 mm bis 10 mm, vorzugsweise 0,5 mm bis 8 mm, insbesondere von 1 mm bis 6 mm gute Ergebnisse erzielt.

Wie oben erläutert, zeichnet sich der erfindungsgemäße Reinigungsartikel durch eine hervorragende Wasseraufnahme aus. So kann der Reinigungsartikel eine Wasseraufnahmefähigkeit im trockenen Zustand von 3 g/g bis 8 g/g aufweisen.

Darüber hinaus zeichnet sich der Reinigungsartikel durch eine sehr geringe Biegesteifigkeit, auch im trockenen Zustand, entsprechend einer Biegelänge in mindestens einer Richtung von vorzugsweise 25 bis 225 mm und/oder 50 bis 200 mm und/oder 75 bis 125 mm und/oder 100 bis 150 mm (trocken), aus. Aufgrund seiner vorteilhaften Eigenschaften eignet sich der erfindungsgemäße Reinigungsartikel hervorragend zur Reinigung der verschiedensten Flächen, beispielsweise von Fenstern, Spiegeln, Glas, Tischen aus Melaminharz, Holz und/oder Kunststoffmaterialien sowie von Möbeln.

Ein weiterer Gegenstand der vorliegenden Erfindung ist ein Verfahren zur Herstellung eines erfindungsgemäßen Reinigungsartikels gemäß einer oder mehreren der vorangehend beschriebenen Ausführungsformen, umfassend folgende Verfahrensschritte:
1.) Herstellen und/oder Bereitstellen einer wässrigen PVA und/oder PVAc enthaltenden Lösung;
2.) Einbringen von Cellulosefasern, vorzugsweise mit einer mittleren Faserlänge von 5 µm bis 10 mm, in die PVA und/oder PVAc enthaltende Lösung unter Ausbildung einer Cellulosefasern enthaltenden Dispersion;
3.)
   a. Applikation der Dispersion auf und/oder in ein textiles Trägermaterial unter Bildung eines PVA- und/oder PVAc-Schaums und ggf.
   b. Aufschäumen der Dispersion unter Bildung einer makroporösen PVA- und/oder PVAc-Schaumstruktur;
4.) ggf. Koagulierung und/oder Stabilisierung des PVA- und/oder PVAc-Schaums und/oder der makroporösen PVA- und/oder PVAc-Schaumstruktur durch Eintauchen in eine Salzlösung;
5.) Vernetzung des PVA und/oder PVAc zu einem die Cellulosefasern enthaltenden PVF-Schaum, wodurch der Reinigungsartikel als Schwammtuch und ggf. als Reinigungsschwamm erhalten wird.

Im ersten Verfahrensschritt wird eine PVA und/oder PVA/PVAc enthaltende Lösung her- und/oder bereitgestellt. Vorzugsweise beträgt der Gesamtanteil an PVA und/oder PVA/PVAc in der Lösung 0,5 Gew.-% bis 20 Gew.-%, noch bevorzugter 1,0 Gew.-% bis 10 Gew.-%, insbesondere 2,5 Gew.-% bis 7,5 Gew.-%.

Erfindungsgemäß ist die PVA und/oder PVAc enthaltende Lösung eine wässrige Lösung. Selbstverständlich können in die PVA und/oder PVAc enthaltende Lösung auch weitere übliche Zusatzstoffe, beispielsweise Porenbildungsmittel, Pigmente, eingebracht werden.

PVA kann bekanntermaßen durch Polymerisation von Vinylacetatmonomer, gefolgt von einer Hydrolyse des Polyvinylacetats hergestellt werden.

Der Hydrolysegrad gibt das molare Verhältnis von hydrophiler Alkoholgruppe und hydrophober Acetatgruppe an.

Der Hydrolysegrad des PVAs beträgt vorzugsweise 99,9 mol% bis 75,0 mol%, noch bevorzugter 99,9, mol% bis 85,0 mol%, insbesondere 99,9 mol% bis 90,0 mol%.

Ein weiteres Charakterisierungsmerkmal des PVAs ist der Polymerisationsgrad.

Dieser ist ein Maß für die Kettenlänge des Polymers. Je höher der Polymerisationsgrad des Polymers ist, desto länger sind die Polymerketten.

Der Polymerisationsgrad des PVA beträgt vorzugsweise von 300 bis 3000, noch bevorzugter von 1000 bis 2500 und insbesondere von 1500 bis 2000.

Erfindungsgemäß bevorzugt beträgt die Viskosität der PVA und/oder PVA/PVAc enthaltenden Lösung vorzugsweise von 3 bis 100 cps (3 bis 100 mPa·s), vorzugsweise von 15 bis 75 cps (15 bis 75 mPa-s), insbesondere von 20 bis 50 cps (20 bis 50 mPa·s).

Anschließend werden in einem zweiten Verfahrensschritt Cellulosefasern, vorzugsweise mit einer mittleren Faserlänge von 5 µm bis 10 mm, in die PVA und/oder PVA/PVAc enthaltende Lösung eingebracht, wobei eine Cellulosefasern enthaltende Dispersion ausgebildet wird.

Erfindungsgemäß bevorzugt beträgt der Anteil an Cellulosefasern in der Dispersion von 0,5 Gew.-% bis 20 Gew.-%, noch bevorzugter 1,0 Gew.-% bis 10 Gew.-%, insbesondere 2,5 Gew.-% bis 7,5 Gew.-%.

In einem dritten Verfahrensschritt wird erfindungsgemäß die Dispersion auf und/oder in ein Trägermaterial appliziert unter Bildung eines PVA- und/oder PVA/PVAc-Schaums. Vorzugsweise ist der PVA- und/oder PVAc-Schaum ein mikroporöser Schaum, der insbesondere eine mittlere Porengröße von 500 nm bis 500 µm aufweist. Hierdurch wird ein Schwammtuch hergestellt.

Optional wird die Dispersion unter Bildung einer makroporösen Schaumstruktur aufgeschäumt. Die mittlere Porengröße der makroporösen Schaumstruktur liegt dabei vorzugsweise von 500 µm bis 10 mm. Dies kann auf dem Fachmann bekannte Art und Weise, beispielsweise durch die Aktivierung von Porenbildungsmitteln durch Temperatur, erfolgen. Mit dieser Variante kann insbesondere ein Reinigungsschwamm hergestellt werden.

Im optionalen Verfahrensschritt 4 erfolgt eine Koagulierung und/oder Stabilisierung des PVA- und/oder PVAc-Schaums und/oder der makroporösen PVA- und oder PVAc-Schaumstruktur durch Eintauchen in eine Salzlösung. Hierzu können die verschiedensten Salzlösungen eingesetzt werden, beispielsweise Magnesium- oder Natriumchlorid oder -sulfat enthaltende Salzlösungen. Hierdurch wird das PVA und/oder PVA/PVAc koaguliert.

Verfahrensschritt 5 umfasst die Vernetzung des PVA und/oder PVAc zu einem die Cellulosefasern enthaltenden PVF-Schaum. Die Vernetzung kann in saurem Medium, beispielsweise mit Formaldehyd als Vernetzer oder anderen Acetalisierungsreaktanden, durchgeführt werden.

Anschließend erfolgt vorzugsweise ein Wasch- und Trocknungsprozess.

Mit dem erfindungsgemäßen Verfahren kann auf besonders einfache Art und Weise ein erfindungsgemäßer Reinigungsartikel hergestellt werden, wobei dieser als Schwammtuch ausgebildet ist.

Dabei ist unter einem Schwammtuch ein Reinigungsartikel zu verstehen, welcher ein mit dem PVF-Schaum versehenes Trägermaterial aufweist.

Unter einem Schwamm ist ein Reinigungsartikel zu verstehen, welcher den PVF-Schaum als selbsttragenden Formkörper aufweist. In einer besonders bevorzugten Ausführungsform der Erfindung wird der erfindungsgemäße Reinigungsartikel einer mechanischen Behandlung als Nachbehandlungsschritt unterzogen. Überraschend wurde erfindungsgemäß gefunden, dass mit einem derartigen Nachbehandlungsschritt die Weichheit des Reinigungsartikels unerwartet stark verbessert werden kann, was sich in einer Reduzierungen der Biegelänge ausdrückt. So kann der Reinigungsartikel mit mechanischer Behandlung eine Biegelänge in trockenem Zustand in mindestens einer Richtung von vorzugsweise 15 bis 185 mm, und/oder 25 bis 175 mm und/oder 50 bis 150 mm und/oder 75 bis 125 mm aufweisen. Damit einher geht einerseits ein sehr angenehmes haptisches Gefühl in der Anwendung des Reinigungsartikels und selbiger lässt sich sehr flexibel und anschmiegsam auf den verschiedensten Oberflächen anwenden. Ohne sich auf einen Mechanismus festzulegen wird vermutet, dass die unerwartet hohe Reduktion der Beigesteifigkeit darauf zurückzuführen ist, dass der PVF-Schaum an den durch den Einsatz von Cellulosefasern entstandenen Fehlstellen bei mechanischer Behandlung besonders leicht deformiert und/oder gebrochen werden kann. Nichtsdestotrotz kann überraschenderweise keine Verschlechterung der Haltbarkeit des Reinigungsartikels beobachtet werden.

Der Nachbehandlungsschritt kann mit dem in Verfahrensschritt 5 erhaltenen Reinigungsartikel direkt oder nach einem Wasch- und Trocknungsschritt durchgeführt werden. Dabei ist es vorteilhaft, wenn der Reinigungsartikel in einem trockenen Zustand (Restfeuchtegehalt kleiner 15 Gew.%, vorzugsweise weniger als 10 Gew.%) vorliegt. Bei der mechanischen Behandlung wird der Reinigungsartikel vorzugsweise einer Umlenkung, wie beispielsweise eine Verbiegung, Deformierung, Verdrehung, unterworfen. Diese Umlenkung erfolgt vorzugsweise zumindest in z-Richtung, wobei die Fläche des Reinigungsartikels in x- und y-Richtung definiert ist und die z-Richtung senkrecht dazu angeordnet ist. Die mechanische Behandlung kann in kontinuierlicher sowie diskontinuierlicher Art und Weise für Bahnenware und/oder für bereits konfektionierte Ware erfolgen. In einem kontinuierlichen Herstellungsprozess kann der Nachbehandlungsschritt besonders einfach durch Umlenken mittels zumindest eines Umlenkelementes, beispielsweise eines Umlenkwalzenpaares und/oder mindestens eines starren Umlenkelementes, erfolgen. Besonders intensive mechanische Behandlung kann durch mäanderförmiges Durchführen durch mehrere Umlenkwalzenpaare und/oder starre Umlenkelemente erfolgen. In Bezug auf die Produktionsrichtung können diese versetzt und/oder in Reihe angeordnet sein.

Durch Einstellung des/der Winkel(s) für die Umlenkung(en) des Reinigungsartikels kann die Intensität der mechanischen Behandlung eingestellt werden.

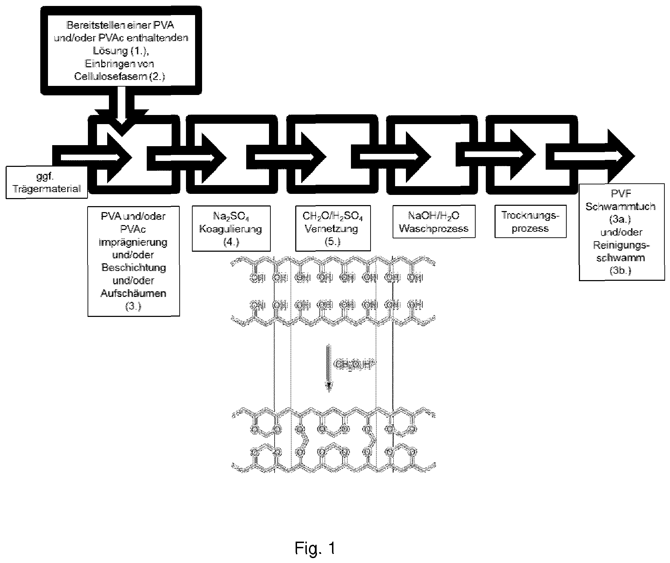

Ein entsprechendes Schema ist in Figur 1 illustriert; erfindungsgemäß sind nur diejenigen Varianten, bei denen eine Imprägnierung und/oder Beschichtung des Trägermaterials erfolgt, so dass ein Schwammtuch erhalten wird.

Ein weiterer Gegenstand der vorliegenden Erfindung ist ein Reinigungsartikel, hergestellt mit einem wie erfindungsgemäß beschriebenen Verfahren.

### Messmethoden:

### Flächengewicht:

Angelehnt an die Prüfvorschrift DIN EN ISO 9073-1 :1989 werden für die Bestimmung des Flächengewichts mindestens zehn Proben mit einer Probengröße von 100 mm x 100 mm ausgestanzt, diese Proben gewogen und die Messwerte mit 100 multipliziert. Aus diesen Einzelwerten wird der Mittelwert gebildet. Das Flächengewicht wird in Gramm oder Kilogramm pro m2 angegeben.

### Dicke:

Angelehnt an die Prüfvorschrift DIN EN ISO 9073-2:1997 wird die Dicke des Produktes mit einem Präzisionsdickenmessgerät mit 25 cm² Prüffläche und 0,5 kPa Vordruck gemessen. Es werden mindestens zehn Stellen der Probe vermessen und anschließend der Mittelwert gebildet.

### Raumgewicht:

Das Raumgewicht wird in Gramm oder Kilogramm pro Kubikmeter angegeben. Zunächst werden das Gewicht und die Dicke eines Reinigungsartikels in trockenem Zustand bestimmt. Daraus wird das Raumgewicht rechnerisch ermittelt.

### Wasseraufnahme:

Die Wasseraufnahme wird in Anlehnung an die DIN 53923 bestimmt. Abweichend zur Norm wird die Abtropfzeit auf 30 s festgelegt. Der Mittelwert wird durch das Gewicht des trockenen Produktes geteilt, die Angabe der Messergebnisse erfolgt in g/g.

### Biegelänge:

Die Bestimmung der Biegelänge erfolgt nach Prüfvorschrift DIN EN ISO 9073-7:1998. Die Probengröße beträgt 250 x 25 mm. Es werden drei Einzelmessungen durchgeführt und der Mittelwert in mm gebildet. Je geringer die Biegelänge ausfällt, desto geringer ist die Biegesteifigkeit.

### Faserlänge:

Die Bestimmung der Faserlänge erfolgt optisch nach ISO 16065-1 :2014-04. Im Rahmen der Erfindung wurde das Messgerät Kajaani FS300 verwendet.

### Mittlere Porengröße Polvinylformal-Schaum:

Es wurde mittels Rasterelektronenmikroskopie analysiert, gefolgt von einer Bildanalyse. Es wir über die gefundenden Poren gemittelt.

### Hydrolysegrad des PVA:

Der Hydrolysegrad des PVA wird über eine kolorimetrische Titration bestimmt.

### Viskosität das PVA:

Die Viskosität wird nach ISO 2555:1989 ermittelt. Es wird ein Brookfield-Viskosimeter eingesetzt.

### Bestimmung des Molekulargewichts:

Die Bestimmung des Molekulargewichts erfolgt mittels Gelpermeationschromatographie (GPC) nach DIN 55672-3:2016-03.

Im Folgenden wird die Erfindung anhand eines Beispiels näher erläutert.

Es werden zwei erfindungsgemäße Reinigungsartikel (1,2) hergestellt und mit einem nicht erfindungsgemäßen Reinigungsartikel (3) verglichen. Zur Herstellung der erfindungsgemäßen Reinigungsartikel (1,2) wird ein Mikrofaservliesstoff als Trägermaterial eingesetzt. Dieser wird mit einer wässrigen PVA/PVAc-Dispersion die 1,5 Gew.% Cellulosestapelfasern, (Faserlänge 30 µm) und 3,5 Gew.% PVA/PVAc enthält, imprägniert. Als Ausgangsmaterial wurde hierfür eine KURARAY POVAL ^{®} 30 - 98 PVA/PVAc-Lösung eingesetzt. Anschließend wird das PVA/PVAc in einer wässrigen Natriumsulfatlösung zu PVF koaguliert, mit Formaldehyd und Säure vernetzt, gewaschen und getrocknet.

Zur Herstellung des nicht erfindungsgemäßen Reinigungsartikels (3) wird wie bei der Herstellung der erfindungsgemäßer Reinigungsartikel (1,2) vorgegangen, mit dem Unterschied, dass die PVA/PVAc-Lösung ohne Cellulosestapelfasern eingesetzt wird.

| **Reinigungs- artikel** | **Abmessungen** | | | **Flächen- gewicht** > | **Absorptions-fähigkeit:** | | **Dicke** | **Biege-steifheit** | **Haftreibung** |
|---|---|---|---|---|---|---|---|---|---|
| | | | | | trocken | trocken | | | |
| | | | | | vor dem waschen | vor dem waschen | | | |
| | | | | | max. | Berechnung | | | |
| | cm x cm | | | g/m² | g | g/g | mm | mm | N |
| 1 | 29,0 | x | 28,9 | 241 | 98 | 4,8 | 1,16 | 119 | 1,4 |
| 2 | 29,0 | x | 28,9 | 243 | 99 | 4,9 | 1,16 | 127 | 1,9 |
| 3 (Vergleich) | 29,0 | x | 28,6 | 253 | 89 | 4,2 | 1,38 | 155 | 3 |

Es wurde gefunden, dass bei den erfindungsgemäßen Reinigungsartikeln die Biegelänge signifikant abnimmt, was mit einer erhöhten Weichheit korreliert.

Dazu kommt, dass sich überraschenderweise die statische Aufladung nahezu halbiert. Dies führt zu einer deutlichen Verbesserung der Reinigungsleistung. Schließlich verbessern sich auch die Schmutzaufnahme und die Wasserabsorption.

## Patentansprüche

1. Reinigungsartikel, umfassend einen Polyvinylformal (PVF) -Schaum, wobei der PVF-Schaum Cellulosefasern aufweist, **dadurch gekennzeichnet dass** der Reinigungsartikel ein textiles Trägermaterial als Grundkörper aufweist, wobei das Trägermaterial mit dem Cellulosefasern aufweisenden PVF-Schaum beschichtet und/oder imprägniert ist.

2. Reinigungsartikel nach Anspruch 1, **gekennzeichnet durch** einen Anteil an üblichen Weichmachern, insbesondere an Wasser, Glycerin, von weniger als 20 Gew.-% und/oder durch einen Anteil an hygroskopischen Salzen, wie insbesondere NaCl, MgCl₂, an Glykolderivaten und/oder Zuckerlösungen von weniger als 40 Gew.-%, jeweils bezogen auf das Gesamtgewicht des Reinigungsartikels.

3. Reinigungsartikel nach Anspruch 1 oder 2, **gekennzeichnet durch** einen Anteil an Cellulosefasern von 1 bis 60 Gew.%, noch bevorzugter von 5 bis 50 Gew.% und insbesondere von 10 bis 40 Gew.% bezogen auf das Gesamtgewicht des PVF-Schaums.

4. Reinigungsartikel nach einem oder mehreren der vorangegangenen Ansprüche, **gekennzeichnet durch** eine mittlere Porengröße, analysiert mittels Rasterelektronenmikroskopie, gefolgt von einer Bildanalyse, von 1 µm bis 5 mm.

5. Reinigungsartikel nach einem oder mehreren der vorangegangenen Ansprüche, **gekennzeichnet durch** eine Biegelänge, gemessen nach DIN EN ISO 9073-7:1998 mit einer Probengröße von 250 x 25 mm, in trockenem Zustand von 25 bis 225 mm.

6. Reinigungsartikel nach einem oder mehreren der vorangegangenen Ansprüche, **dadurch gekennzeichnet dass** die Cellulosefasern eine mittlere Faserlänge, gemessen nach ISO 16065-1 :2014-04, von 5 µm bis 10 mm aufweisen.

7. Reinigungsartikel nach einem oder mehreren der vorangegangenen Ansprüche, **gekennzeichnet durch** eine Wasseraufnahmefähigkeit, gemessen in Anlehnung an die DIN 53923 mit einer Abtropfzeit von 30 s, im trockenen Zustand von 3 g/g bis 8 g/g.

8. Verfahren zur Herstellung eines Reinigungsartikels nach einem oder mehreren der vorhergehenden Ansprüche, umfassend folgende Verfahrensschritte:
- Herstellen und/oder Bereitstellen einer wässrigen PVA und/oder PVAc enthaltenden Lösung;
- Einbringen von Cellulosefasern einer mittleren Faserlänge von 5 µm bis 10 mm in die PVA und/oder PVAc enthaltende Lösung unter Ausbildung einer Cellulosefasern enthaltenden Dispersion;
o Applikation der Dispersion auf und/oder in ein textiles Trägermaterial unter Bildung eines PVA- und/oder PVAc-Schaums und ggf.
o Aufschäumen der Dispersion unter Bildung einer makroporösen PVA- und/oder PVAc-Schaumstruktur;
- ggf. Koagulierung und/oder Stabilisierung des PVA- und/oder PVAc-Schaums und/oder der makroporösen PVA- und/oder PVAc-Schaumstruktur durch Eintauchen in eine Salzlösung;
- Vernetzung des PVA und/oder PVAc zu einem die Cellulosefasern enthaltenden PVF-Schaum, wodurch der Reinigungsartikel als Schwammtuch und ggf. als Reinigungsschwamm erhalten wird.

9. Verfahren nach Anspruch 8, **dadurch gekennzeichnet dass** der Reinigungsartikel einer mechanischen Behandlung als Nachbehandlungsschritt unterzogen wird.

10. Verfahren nach Anspruch 8 oder 9, **dadurch gekennzeichnet dass** eine PVA und/oder PVAc enthaltende Lösung eingesetzt wird, in der das PVA und/oder PVAc einen Hydrolysegrad, bestimmt über eine kolorimetrische Titration, von 99,9 mol% bis 75,0 mol% aufweist.

11. Verfahren nach einem oder mehreren der Ansprüche 8 bis 10, **dadurch gekennzeichnet dass** eine PVA und/oder PVAc enthaltende Lösung eingesetzt wird, in der das PVA und/oder PVAc einen Polymerisationsgrad von 300 bis 3000 aufweist, bestimmt wie der Beschreibung zu entnehmen.

12. Verfahren nach einem oder mehreren der Ansprüche 8 bis 10, **dadurch gekennzeichnet dass** eine PVA und/oder PVAc enthaltende Lösung eingesetzt wird, die eine Viskosität, gemessen nach nach ISO 2555:1989 mit einem Brookfield-Viskosimeter, von 3 bis 100 cps (3 bis 100 mPa·s) aufweist.

13. Reinigungsartikel nach einem oder mehreren der Ansprüche 1 bis 7, hergestellt nach mit einem Verfahren nach einem oder mehreren Ansprüchen 8 bis 12.

## Claims

1. Cleaning article comprising a polyvinyl formal (PVF) foam, wherein the PVF foam comprises cellulose fibers, **characterized in that** the cleaning article comprises a textile carrier material as a main body, wherein the carrier material is coated and/or impregnated with the PVF foam comprising cellulose fibers.

2. Cleaning article according to Claim 1, **characterized by** a proportion of customary plasticizers, in particular of water, glycerol, of less than 20% by weight and/or by a proportion of hygroscopic salts, such as in particular NaCl, MgCl₂, of glycol derivatives and/or sugar solutions of less than 40% by weight, in each case based on the total weight of the cleaning article.

3. Cleaning article according to Claim 1 or 2, **characterized by** a proportion of cellulose fibers of 1% to 60% by weight, more preferably of 5% to 50% by weight and in particular of 10% to 40% by weight, based on the total weight of the PVF foam.

4. Cleaning article according to one or more of the preceding claims, **characterized by** an average pore size, analyzed by scanning electron microscopy followed by image analysis, of 1 µm to 5 mm.

5. Cleaning article according to one or more of the preceding claims, **characterized by** a bending length measured according to DIN EN ISO 9073-7:1998 with a sample size of 250 × 25 mm in the dry state of 25 to 225 mm.

6. Cleaning article according to one or more of the preceding claims, **characterized in that** the cellulose fibers have an average fiber length measured according to ISO 16065-1:2014-04 of 5 µm to 10 mm.

7. Cleaning article according to one or more of the preceding claims, **characterized by** a water absorption capacity measured on the basis of DIN 53923 with a drip-dry time of 30 s in the dry state of 3 g/g to 8 g/g.

8. Process for producing a cleaning article according to one or more of the preceding claims, comprising the process steps of:
- producing and/or providing an aqueous PVA- and/or PVAc-containing solution;
- introducing cellulose fibers having an average fiber length of 5 µm to 10 mm into the PVA- and/or PVAc-containing solution to form a dispersion containing cellulose fibers;
• applying the dispersion onto and/or into a textile carrier material to form a PVA and/or PVAc foam and optionally
• foaming the dispersion to form a macroporous PVA and/or PVAc foam structure;
- optionally coagulating and/or stabilizing the PVA and/or PVAc foam and/or the macroporous PVA and/or PVAc foam structure by immersion in a salt solution;
- crosslinking the PVA and/or PVAc to afford a PVF foam containing the cellulose fibers, thus obtaining the cleaning article as a sponge cloth and optionally as a cleaning sponge.

9. Process according to Claim 8, **characterized in that** the cleaning article is subjected to a mechanical treatment as an aftertreatment step.

10. Process according to Claim 8 or 9, **characterized in that** it employs a PVA- and/or PVAc-containing solution in which the PVA and/or PVAc has a degree of hydrolysis determined via a colorimetric titration of 99.9 mol% to 75.0 mol%.

11. Process according to any of Claims 8 to 10, **characterized in that** it employs a PVA- and/or PVAc-containing solution in which the PVA and/or PVAc has a degree of polymerization of 300 to 3000 determined as specified in the description.

12. Process according to one or more of Claims 8 to 10, **characterized in that** it employs a PVA- and/or PVAc-containing solution having a viscosity measured according to ISO 2555:1989 with a Brookfield viscometer of 3 to 100 cps (3 to 100 mPa·s).

13. Cleaning article according to one or more of Claims 1 to 7 produced by a process according to one or more of Claims 8 to 12.

## Revendications

1. Article de nettoyage, comprenant une mousse de poly(vinyl formate) (PVF), la mousse de PVF présentant des fibres de cellulose, **caractérisé en ce que** l'article de nettoyage présente un matériau de support textile en tant que corps de base, le matériau de support étant revêtu et/ou imprégné avec la mousse de PVF présentant des fibres de cellulose.

2. Article de nettoyage selon la revendication 1, **caractérisé par** une proportion en assouplissants habituels, en particulier en eau, glycérine, de moins de 20 % en poids et/ou par une proportion en sels hygroscopiques, comme en particulier NaCl, MgCl₂, en dérivés de glycol et/ou en solutions de sucre de moins de 40 % en poids, à chaque fois par rapport au poids total de l'article de nettoyage.

3. Article de nettoyage selon la revendication 1 ou 2, **caractérisé par** une proportion en fibres de cellulose de 1 à 60 % en poids, plus préférablement de 5 à 50 % en poids et en particulier de 10 à 40 % en poids par rapport au poids total de la mousse de PVF.

4. Article de nettoyage selon l'une quelconque ou plusieurs des revendications précédentes, **caractérisé par** une taille moyenne de pores, analysée au moyen d'une microscopie électronique à balayage, suivie d'une analyse d'images, de 1 µm à 5 mm.

5. Article de nettoyage selon l'une quelconque ou plusieurs des revendications précédentes, **caractérisé par** une longueur de pliage, mesurée selon la norme DIN EN ISO 9073-7:1998 avec une taille d'éprouvette de 250 x 25 mm, dans un état sec, de 25 à 225 mm.

6. Article de nettoyage selon l'une quelconque ou plusieurs des revendications précédentes, **caractérisé en ce que** les fibres de cellulose présentent une longueur moyenne de fibres, mesurée selon la norme ISO 16065-1:2014-04, de 5 µm à 10 mm.

7. Article de nettoyage selon l'une quelconque ou plusieurs des revendications précédentes, **caractérisé par** une capacité d'absorption d'eau, mesurée conformément à la norme DIN 53923 avec un temps d'égouttement de 30 s, dans un état sec, de 3 g/g à 8 g/g.

8. Procédé de préparation d'un article de nettoyage selon l'une quelconque ou plusieurs des revendications précédentes, comprenant les étapes de procédé suivantes :
- préparation et/ou mise à disposition d'une solution aqueuse contenant un PVA et/ou un PVAc ;
- introduction de fibres de cellulose dotées d'une longueur moyenne de fibres de 5 µm à 10 mm dans la solution contenant un PVA et/ou un PVAc avec formation d'une dispersion contenant des fibres de cellulose ;
o application de la dispersion sur et/ou dans un matériau de support textile avec formation d'une mousse de PVA et/ou de PVAc et éventuellement
o le fait de faire mousser la dispersion avec formation d'une structure de mousse macroporeuse de PVA et/ou de PVAc ;
- éventuellement coagulation et/ou stabilisation de la mousse de PVA et/ou de PVAc et/ou de la structure de mousse macroporeuse de PVA et/ou de PVAc par immersion dans une solution de sel ;
- réticulation du PVA et/ou du PVAc pour donner une mousse de PVF contenant des fibres de cellulose, ce par quoi l'article de nettoyage est obtenu en tant que tissu d'éponge et éventuellement en tant qu'éponge de nettoyage.

9. Procédé selon la revendication 8, **caractérisé en ce que** l'article de nettoyage est soumis à un traitement mécanique en tant qu'étape de post-traitement.

10. Procédé selon la revendication 8 ou 9, **caractérisé en ce qu'**une solution contenant un PVA et/ou un PVAc est utilisée dans laquelle le PVA et/ou le PVAc présente un degré d'hydrolyse, déterminé par le biais d'un titrage colorimétrique, de 99,9 % en moles à 75,0 % en moles.

11. Procédé selon l'une quelconque ou plusieurs des revendications 8 à 10, **caractérisé en ce qu'**une solution contenant un PVA et/ou un PVAc est utilisée dans laquelle le PVA et/ou le PVAc présente un degré de polymérisation de 300 à 3 000, déterminé comme on peut l'extraire de la description.

12. Procédé selon l'une quelconque ou plusieurs des revendications 8 à 10, **caractérisé en ce qu'**une solution contenant un PVA et/ou un PVAc est utilisée qui présente une viscosité, mesurée selon la norme ISO 2555:1989 avec un viscosimètre Brookfield, de 3 à 100 cps (3 à 100 mPa.s).

13. Article de nettoyage selon l'une quelconque ou plusieurs des revendications 1 à 7, préparé selon un procédé selon l'une quelconque ou plusieurs des revendications 8 à 12.
